# EUROPÄISCHE PATENTSCHRIFT

(11) **EP 0 955 357 B1**
(45) Veröffentlichungstag und Bekanntmachung des Hinweises auf die Patenterteilung: **16.08.2001**
(21) Anmeldenummer: 99107491.5
(22) Anmeldetag: 29.04.1999
(51) Int. Cl.: C12F 3/06, B08B 9/08, C12H 1/02

(54) **Verfahren zur Entfernung von Weinstein aus bei der Weinherstellung und Weinlagerung verwendeten Behältern und zur Wiedergewinnung der im Weinstein enthaltenen Weinsäure**
Process for separation of tartar from vessels used by the production and storage of wine and for recovery of tartaric acid contained in the tartar
Procédés de séparation du tartre de vin d'un récipient, utilisé pour la production et le stockage du vin, et de récupération de l'acide tartarique contenu dans le tartre de vin

(30) Priorität: 30.04.1998 DE 19819284
(43) Veröffentlichungstag der Anmeldung: 10.11.1999
(73) Patentinhaber: Gebiets-Winzergenossenschaft Franken eG, 97318 Kitzingen (DE)
(72) Erfinder: Schätzlein, Helmut, 97246 Eibelstadt (DE)
(74) Vertreter: Böck, Bernhard, Dipl.-Ing.

(56) Entgegenhaltungen:
- AT-B- 296 922
- AU-B- 590 073

## Beschreibung

Die Erfindung betrifft ein Verfahren zur Entfernung von Weinstein aus bei der Weinherstellung und Weinlagerung verwendeten Behältern und zur Wiedergewinnung der im Weinstein enthaltenen Weinsäure.

Bei der Weinbereitung scheidet Wein sowohl während der Gärung in einem Gärbehälter als auch während der anschließenden Lagerung in einem Weinlagerbehälter Weinstein als Salz der Weinsäure in Form von Kaliumhydrogentartrat aus. Dabei lagert sich der Weinstein als mehr oder weniger harter krustenartiger Belag an Wand und/oder Boden der Behälter ab. Dies ist unerwünscht, so daß die Behälter regelmäßig einem Reinigungsvorgang unterzogen werden müssen.

Aus dem Stand der Technik sind drei grundsätzlich unterschiedliche Verfahren zur Entfernung von Weinstein aus den Behältern bekannt. So kann der Weinstein beispielsweise mechanisch abgetragen und entfernt werden. Dies ist jedoch umständlich und personalintensiv und damit teuer. Zumal ist damit eine vollständige Entfernung des krustenartigen Weinsteinbelages in der Regel nicht möglich. Es ist weiter bekannt, den Weinstein mit Heißwasser bzw. mit Dampf auf- und/oder abzulösen. Dies ist ebenfalls umständlich und erfordert einen vergleichsweise hohen Energieeinsatz. Schließlich ist noch bekannt, den Weinstein mittels Natronlauge NaOH ab- und aufzulösen. Dies führt jedoch aufgrund der Alkalität der Natronlauge in Verbindung mit der gelösten organischen Weinsäure zu hochbelasteten Abwässern mit insbesondere hoher CSB- und BSB₅-Fracht. Vor Einleitung dieser Abwässer in beispielsweise kommunale Abwasserkläranlagen muß daher regelmäßig durch Zugabe von Salzsäure zunächst ein pH-Wert von 6,5 - 9 eingestellt werden. Hierbei entsteht aus der Natronlauge (Na0H) und der Salzsäure (HCL) wiederum schwer abbaubares Kochsalz (NaCl), das häufig in Verbindung mit der organischen Schmutzfracht an die Grenzen der Belastbarkeit der Kläranlagen, aber auch zu deren "Umkippen" führt.

AU 590073 B offenbart ein Verfahren zur Herstellung von Weinstein aus Rückstanden der Weinbereitung, dadurch gekennzeichnet, daß als Lösungsmittel Natronlauge (NaOH) verwendet wird.

AT 296922 B betrifft ein Verfahren zur Herstellung von Kaliumhydrogentartrat aus tartrathaltigen Rückständen der Weinbereitung. Faßweinstein, Geläger oder Treberweinstein werden mit Säure oder Lauge aufgelöst. Im falle des sauren Aufschlusses wird die Rückalkalisierung mit KOH oder basischen Kaliumsalzen vorgenommen.

Ausgehend von dem vorstehend genannten Stand der Technik ist es die Aufgabe der vorliegenden Erfindung, ein Verfahren zur Entfernung von Weinstein aus bei der Weinherstellung und Weinlagerung verwendeten Behältern zu schaffen, das einfach, kostengünstig und vergleichsweise umweltschonend ist und durch das die im Weinstein enthaltene Weinsäure wiedergewinnbar ist.

Diese Aufgabe wird durch ein Verfahren nach der Lehre des Patentanspruchs 1 gelöst.

Vorteilhafte Ausbildungen des Verfahrens sind Gegenstand der Unteransprüche.

Erfindungsgemäß erfolgt die Entfernung von Weinstein aus bei der Weinherstellung und Weinlagerung verwendeten Behältern mittels eines in den Behälter eingebrachten Lösungsmittels, wobei jedoch im Gegensatz zum Stand der Technik als Lösungsmittel Kalilauge (KOH) Verwendung findet.

Zunächst einmal ist die rein chemische Lösung anwendungstechnisch einfach und damit kostengünstig. Die dabei entstehende Weinsäure-Kalilauge-Lösung ist zwar abwassertechnisch in grundsätzlich gleicher Weise belastet wie eine Weinsäure-Natronlauge-Lösung bei der Weinsteinablösung mit Natronlauge nach dem Stand der Technik, doch ist aus der erfindungsgemäß anfallenden Weinsäure-Kalilauge-Lösung, anders als bei der Natronlauge, die Weinsäure in einem nachgeschalteten Verfahren rückgewinnbar. Dabei wird unter Zugabe von Schwefelsäure die Weinsäure-Kalilauge-Lösung in Weinsäure und Kaliumsulfat aufgespalten. Da Weinsäure ein wichtiger Rohstoff für eine Reihe von Anwendungen ist, verringert sich zum einen die zu verwerfende Abwassermenge, wobei zudem die anfallenden Abwässer vergleichsweise niedrig belastet sind.

Dies bedeutet mit anderen Worten, daß beim erfindungsgemäßen Verfahren zur Auflösung von Weinstein mit Kalilauge das anfallende "Abwasser" nunmehr einen Wertstoff darstellt, der ohne zusätzliche Kosten für den Weinbaubetrieb nun sogar zur Weinsäurerückgewinnung verwendet bzw. an entsprechende Verarbeiter abgegeben werden kann.

Die Rückgewinnung der Weinsäure aus dem in der Kalilauge (KOH) gelösten Weinstein kann durch ein beliebiges geeignetes Trennverfahren erfolgen. Vorzugsweise gelangt dabei jedoch die umgekehrte Osmose (RO) oder die Nano-Filtration zur Anwendung.

Nach einem bevorzugten Ausführungsbeispiel der Erfindung beträgt die Konzentration der Kalilauge (KOH) zwischen 0,1% und 10%, vorzugsweise ca. 5%. Bei dieser Konzentration wird eine schnelle und zuverlässige Lösung des Weinsteins bei gleichzeitiger ausreichender Umwelt- und Anwenderverträglichkeit erreicht.

In grundsätzlich beliebiger Weise kann die Anwendung des erfindungsgemäßen Verfahrens beispielsweise dadurch erfolgen, daß der Behälter, aus dem der Weinstein entfernt werden soll, mit Kalilauge gefüllt oder gespült wird. Um den Verbrauch von Kalilauge und damit insbesondere die Umweltbelastung zu minimieren, wird nach einem besonders bevorzugten Ausführungsbeispiel der Erfindung die Kalilauge auf zumindest die den Weinstein aufweisenden Wand- und Bodenbereiche des Behälters versprüht. Dies kann beispielsweise mittels eines Sprühkopfes erfolgen, der in definierter Position bzw. beweglich in den jeweiligen Behälter einführbar ist.

Nach einem besonders bevorzugten Ausführungsbeispiel der Erfindung wird die Kalilauge nach Lösung des Weinsteins unter gleichzeitiger Verminderung ihrer Alkalität durch Zugabe unverbrauchter Kalilauge erneut auf die gewünschte Konzentration aufkonzentriert und erneut der Verwendung als Lösungsmittel für Weinstein zugeführt. Dabei kann die Aufkonzentration während der Reinigung eines Behälters, beispielsweise auch im zu reinigenden Behälter selbst erfolgen. Vorzugsweise wird jedoch die Weinsäure-Kalilauge-Lösung zunächst nach dem Einsprühen und einem ersten Lösungsschritt wieder aus dem zu reinigenden Behälter geführt, in einem Laugentank gesammelt, auf den gewünschten Wert aufkonzentriert und anschließend erneut in den zu reinigenden Behälter gegeben. Dies wird nach Art eines Umlaufverfahrens solange wiederholt, bis der gesamte im Behälter befindliche Weinstein gelöst und abgeführt ist.

Im Gegensatz zum Stand der Technik, bei dem die dort verwendete Natronlauge nur bis zu ihrer Erschöpfung, d. h. bis zum Verbrauch ihrer Alkalität durch den Weinstein bzw. die Weinsäure zur Anwendung gelangt, kann beim erfindungsgemäßen Einsatz von Kalilauge dieses so lange nachkonzentriert bzw. nachdosiert werden, bis die Lösung gesättigt und eine dickflüssige Kalilauge-Weinsäure-Lösung entstanden ist, aus der anschließend die Weinsäure wiedergewonnen werden kann.

## Patentansprüche

1. Verfahren zur Entfernung von Weinstein aus bei der Weinherstellung und Weinlagerung verwendeten Behältern mittels eines in den Behälter eingebrachten Lösungsmittels,
dadurch **gekennzeichnet**,
daß als Lösungsmittel Kalilauge (KOH) Verwendung findet.

2. Verfahren nach Anspruch 1,
dadurch **gekennzeichnet**,
daß die Konzentration der Kalilauge (KOH) zwischen 0,1% und 10%, vorzugsweise 5%, beträgt.

3. Verfahren nach Anspruch 1 oder 2,
dadurch **gekennzeichnet**,
daß die Kalilauge (KOH) auf zumindest die den Weinstein aufweisenden Wand- und Bodenbereiche des Behälters versprüht wird.

4. Verfahren nach einem der Ansprüche 1 bis 3,
dadurch **gekennzeichnet**,
daß die Kalilauge (KOH) nach Lösung des Weinsteins unter Verminderung der Alkalität durch Zugabe unverbrauchter Kalilauge erneut auf die gewünschte Konzentration aufkonzentriert wird und erneut der Verwendung als Lösungsmittel für Weinstein zugeführt wird.

5. Verfahren nach einem der Ansprüche 1 bis 4,
dadurch **gekennzeichnet**,
daß die im Weinstein enthaltene Weinsäure aus der Kalilauge (KOH) durch ein Trennverfahren zumindest teilweise wiedergewonnen wird.

6. Verfahren nach Anspruch 5,
dadurch **gekennzeichnet**,
daß als Trennverfahren Umkehrosmose (RO) oder Nano-Filtration zur Anwendung gelangt.

## Claims

1. A process for the removal of tartar from containers used in wine production and wine storage by means of a solvent introduced into the container,
characterized in that
aqueous potassium hydroxide (KOH) is used as the solvent.

2. The process according to claim 1,
characterized in that
the concentration of the aqueous potassium hydroxide (KOH) is between 0.1 % and 10 %, preferably 5 %.

3. The process according to claim 1 or 2,
characterized in that
the aqueous potassium hydroxide (KOH) is sprayed on at least the wall and floor regions of the container which have the tartar.

4. The process according to one of the claims 1 to 3,
characterized in that
the aqueous potassium hydroxide (KOH) is, after dissolving the tartar and having its alkalinity reduced, reconcentrated to the desired concentration by the addition of unused aqueous potassium hydroxide and is resupplied for use as the solvent for tartar.

5. The process according to one of the claims 1 to 4,
characterized in that
the tartaric acid contained in the tartar is at least partially reclaimed from the aqueous potassium hydroxide (KOH) by a separation process.

6. The process according to claim 5,
characterized in that
reverse osmosis (RO) or nanofiltration is used as the separation process.

## Revendications

1. Procédé d'élimination du tartre de récipients utilisés pour la fabrication de vin ou le stockage de vin, réalisé au moyen de l'introduction d'un agent de dissolution dans lesdits récipients,
caractérisé en ce
qu'on met en oeuvre de la lessive de potasse (KOH) à titre d'agent de dissolution.

2. Procédé selon la revendication 1,
caractérisé en ce
que la concentration de la lessive de potasse (KOH) se situe entre 0,1 % et 10 %, et est de préférence de 5 %.

3. Procédé selon la revendication 1 ou 2,
caractérisé en ce
que la lessive de potasse (KOH) est pulvérisée au moins sur les zones des parois et du fond du récipient qui présentent du tartre.

4. Procédé selon l'une quelconque des revendications 1 à 3,
caractérisé en ce
que, suite à la dissolution du tartre, la lessive de potasse (KOH), qui a été soumise à une diminution d'alcalinité, est reconcentrée jusqu'à la concentration désirée, par addition de lessive de potasse non encore utilisée, pour être mise de nouveau en oeuvre à titre d'agent de dissolution du tartre.

5. Procédé selon l'une quelconque des revendications 1 à 4,
caractérisé en ce
que l'acide tartrique contenu dans le tartre est au moins partiellement récupéré de la lessive de potasse (KOH) par un procédé de séparation.

6. Procédé selon la revendication 5,
caractérisé en ce
qu'on met en oeuvre à titre de procédé de séparation un procédé d'osmose inverse (RO) ou de nano-filtration.
